(19) **Europäisches Patentamt**

**European Patent Office**

**Office européen des brevets**

(11) **EP 1 351 445 A1**

(12) **EUROPEAN PATENT APPLICATION**

(43) Date of publication:
08.10.2003 Bulletin 2003/41

(51) Int Cl.⁷: **H04L 12/26**, H04L 12/56, H04L 12/14

(21) Application number: **02251983.9**

(22) Date of filing: **20.03.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **BRITISH TELECOMMUNICATIONS public limited company**<br>**London EC1A 7AJ (GB)** | (72) Inventor: **Cheng, King Leung Kennedy**<br>**Ipswich Suffolk IP4 4HW (GB)**<br><br>(74) Representative: **Nash, Roger William et al**<br>**BT Group Legal Services,**<br>**Intellectual Property Department,**<br>**8th Floor,**<br>**120 Holborn**<br>**London EC1N 2TE (GB)** |

(54) **Method and apparatus for mapping data traffic flows to application sessions**

(57)    The mapping of Internet traffic to application sessions is a very important requirement for both present and future Internet technologies such as dynamic Internet charging, usage & QoS monitoring, QoS provision and QoS control. The invention provides a method and apparatus for performing the mapping to an application session which takes raw traffic flows and filters the flows to remove from consideration those flows which do not meet pre-determined characteristics of the application. For the remaining flows, information concerning the activation and last activation times is compared with corresponding information regarding the application session via one or more logical conditions. Any flows which meet the logical conditions are then mapped to the session.

Figure 3

**EP 1 351 445 A1**

**Description**

Technical Field

The present invention relates to a method and apparatus for mapping data traffic flows to application sessions.

Background to the Invention and Prior Art

The mapping of Internet traffic to application sessions is a very important requirement for both present and future Internet technologies such as dynamic Internet charging, usage & QoS monitoring, QoS provision and QoS control. Especially for Internet charging, mapping flows to sessions created by the same/different applications is a necessity, as different sessions might use different QoS policies and could be charged differently. In reality, current applications and operating systems rarely reveal such mappings because they usually pick a random flow-ID for data traffic flows to and from an application at the start of the application session. There is plenty of research around the area of flow detection and measuring system (see e.g IETF Internet Protocol Flow Export IPFX at http://search.ietf. org/internet-drafts/draft-quittek-ipfx-req-01.txt), and there are many advanced metering systems (e.g. Cisco® Netflow (see http://www.cisco.com/warp/public/732/Tech/netflow/), and NeTraMet (see http://www2.auckland.ac.nz/net/Ne-TraMet/)), but none of them solve the problem of mapping flows to application sessions. They assume applications and operating systems will one day be able to reveal such mapping. But what about now, at the present time?

Why is it so important to realise the mapping? The mapping is a must for dynamic Internet charging. For example, suppose user A is downloading two files from user B's machine. User A is running an FTP client program which links to the FTP server running on B's machine. The FTP client program opens two separate sessions, session S1 is paid by user A and another session S2 is paid by user B. Suppose user B would like A to have the file as soon as possible, so user B select the highest QoS for S1 and is willing to pay for the highest cost. In S2, user A is downloading some not so important files from B's machine, so user A selects a low priority for the session. The system will need to make sure that the two sessions are not mistaken from one another, for the reason that each of them has different QoS policy and is paid by 2 different parties. But without knowing which flow belongs to which session, this Internet charging scheme will not be possible.

It is known that a meter can measure all the Internet traffic flowing in and out of a system. Rules (for example Simple Ruleset Language (SRL) in NeTraMet terms) can be applied to the metering device as instructions or filters for the meter to target certain flows and format the output of the measurement results.

The current Internet traffic metering technology enables us to monitor flows between systems. Each flow is distinguished by its flow identifier "Flow-Id". A Flow-Id is a unique identifier of a flow which contains the source IP address, target IP address, source port number, target port number, the protocol ID and optionally the Diff-Serve Code Point (DSCP). The meter collects information on each flow (e.g. number of packets, volume of traffic, duration) and stores them accordingly together with the unique Flow-Id of each flow. But these records don't show which application session they belong to.

Unfortunately, the Internet architecture has no guaranteed way for any system other than the application itself to identify a connection. IPv6 uses flow labels to spare the network having to investigate the originator of the traffic. Nevertheless, we are still very far from having IPv6 (with identifier) as the dominant Internet transport system. We therefore need a solution that can be used for the current transport protocol: IPv4.

Some multimedia applications such as Microsoft® Netmeeting® [see http://www.microsoft.com/windows/netmeeting/] use the Resource Reservation Protocol RSVP [see http://www.ietf.org/html.charters/rsvp-charter.html] signalling to request the network to reserve resource for the media stream. This signal can be detected by a metering device, and the streams can be mapped to the application session. But very little software uses RSVP. On the other hand, some multimedia applications such as RealPlayer® [see http://www.real.com/] create their own socket, and control QoS with its own mechanism. Consequently, it will be very difficult for programs other than the originating RealPlayer® itself to identify which connections were created. Modifying the application in-house is not a practical option, as the source code is usually not provided, and this act could violate the licence agreement. Besides, there is a vast amount of similar applications on the market. It is impossible to modify all of them just to extract the flow information out. And often, a service provider wants to offer a new service without having to modify any existing software.

In general, therefore it is necessary to find a way to map data traffic flows to application sessions. However, this mapping cannot be extracted easily from the application itself, the current network is not capable to reveal such information, and finally modifying any operating system or existing applications is not a feasible option. As a result, we have to find an alternative way to solve the problem. The present invention presents such a solution.

## Summary of the Invention

The present invention addresses the above problem by providing, from a first aspect, a method for mapping data traffic flows to an application session, comprising comparing one or more characteristics of the application session with one or more characteristics of the data traffic flows according to one or more logical conditions, wherein those data traffic flows which meet the logical conditions are mapped to the application session.

The invention is thus able to use modern flow detection systems along with wild constraints and fuzzy pattern matching to create a mapping. It provides the advantage that it does not require any modification to any current applications or any operating system when it is implemented.

Preferably one or more characteristics of the application session comprise at least one of: the session start time and/or the session end time and/or the present system time. Moreover, preferably one or more characteristics of the data traffic flows comprise at least one of: the traffic flows' start times and/or the traffic flows' last activation times and/or the present system time. Such features allow for direct comparison of session and traffic flow features without the need for any additional processing.

In addition, preferably the logical conditions comprise one or more characteristic value tolerances applied to the application session characteristics, to which the data flows' characteristics must relate according to the logical conditions to be mapped to the session. The use of such tolerances allows for local conditions on the client computer to be taken into account.

In a preferred embodiment, the logical conditions include the following:

$$(t_{as} - n) <= t_a <= (t_{as} + p);$$

$$(t_{ae} - n) <= t_{la} <= (t_{ae} + p);$$

wherein:

$t_{as}$ is the application session start time;
$t_a$ is a data traffic flow activation time;
$t_{ae}$ is the application session end time;
$t_{la}$ is a data traffic flow last active time; and
$n$ and $p$ are characteristic value tolerances.

By applying the logical conditions after the application session end time the invention provides the advantage that it is possible to map the data flows even after they have finished. The is preferably accomplished by using the flow records as logged by a flow meter.

Moreover, in the preferred embodiment, the logical conditions may also include the following:

$$(t_{as} - n) <= t_a <= (t_{as} + p);$$

$$(t_s - n) <= t_{la} <= (t_s + p);$$

wherein:

$t_{as}$ is the application session start time;
$t_a$ is a data traffic flow activation time;
$t_s$ is the present system time;
$t_{la}$ is a data traffic flow last active time; and
$n$ and $p$ are characteristic value tolerances.

By using the present system time in the logical conditions the present invention is also able to perform flow mapping while the application session is still active.

Furthermore, preferably the characteristic value tolerances are application session dependent. This allows different tolerances to be set for different applications.

Furthermore, in the preferred embodiment there is further provided a step of filtering the data traffic flows according to the respective fixed properties thereof to remove from consideration by the comparing step those data traffic flows whose fixed properties indicate that they should not be mapped to the application session. Such filtering provides a pre-processing step to improve the accuracy of the mapping.

Preferably the fixed properties used by the filtering step include any one or more of the following: the network address of the source of a data traffic flow (e.g. source IP address); the network address of the destination of a data traffic flow (e.g. destination IP address); the source port number; the destination port number; and/or the protocol ID.

Moreover in the preferred embodiment the filtering step comprises comparing the respective fixed properties of the data traffic flows with one or more logical filter conditions, and wherein those flows whose fixed properties meet all the logical filter conditions are then considered as possible mappings to the application session. The use of such logical conditions in the filtering step can further improve the accuracy of the mapping obtained.

From a second aspect, the present invention also provides an apparatus for mapping data traffic flows to an application session, comprising logical comparison means for comparing one or more characteristics of the application session with one or more characteristics of the data traffic flows according to one or more logical conditions, wherein the logical comparison means is further arranged to map those data traffic flows which meet the logical conditions to the application session.

The present invention in the second aspect provides the same advantages, and may possess the same further features and advantages as in the first aspect.

From a third aspect, the present invention also provides a computer program arranged such that when executed on a computer it causes the computer to perform the method according to the first aspect.

Furthermore, from a fourth aspect, the present invention also provides a computer readable storage medium arranged to store a computer program according to the third aspect of the invention. The computer readable storage medium may be any magnetic, optical, magneto-optical, solid-state, or other storage medium capable of being read by a computer.

Brief Description of the Drawings

Further features and advantages provided by the present invention will become apparent from the following description of an embodiment thereof, presented by way of example only, and by reference to the accompanying drawings, wherein like reference numerals refer to like parts, and wherein:

Figure 1 is a block diagram of a computer which forms the operating environment of the present invention;
Figure 2 is a block diagram showing an outline of the embodiment of the invention; and
Figure 3 is a process diagram showing the process followed in the embodiment of the invention.

Description of the embodiment

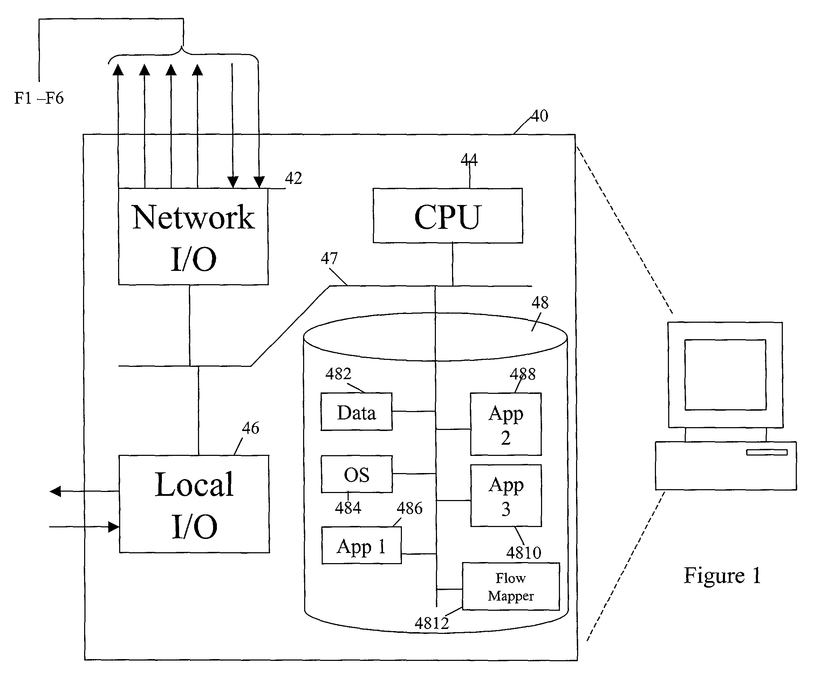

An embodiment of the present invention will now be described with reference to Figures 1, 2, and 3.

Figure 1 illustrates the operating environment of the present invention. More particularly, the embodiment of the present invention provides a flow mapper software program 4812, which is stored on a computer-readable storage medium such as the hard disk 48 provided in a user computer 40. By way of example, the flow mapper program 4812 may be part of a software application, part of a middleware, or a stand-alone program in its own right. Also stored on the hard disk 48 is an operating system program 484, program and system data and user files 482, and a number of executable application programs App1 486, App2 488 and App3 4810 , each of which possess functionality to access or send data over a network. The computer is further provided with a central processing unit 44 capable of executing computer program instructions, a central data bus 47 to provide internal communications between the components, a network input and output card 42 to allow interconnection of the computer to a network, and local input and output interface means 46 to allow connection of user input and output devices such as monitors, keyboard, mouse, printer, or the like.

It should of course be noted and would be understood by the intended reader that the above description is for illustrative purposes in respect of the present invention only, and in reality many more systems, sub-systems and components would be required to provide a fully operational computer. Such additional elements are well known in the art, and should be taken as being implied herein.

In use the operation of the above described operating environment may be as follows, by way of example. Suppose the user of the computer starts up the three applications App1, App2, and App3 almost simultaneously to give respective application sessions for each. Each session involves setting up one or more data traffic flows F1 to F6 via the network interface 42, such that, for example, App1 might create outward flows F1, and F2. App2 might create outward flow F3 and receives inward flows F5 and F6. App 3 might create a single outward flow F4. The applications App1, App2, and App3 may be any type of software applications which create data traffic flows over a network, such as, by way of non-limiting example, file-sharing utilities such as Napster of Gnutella, FTP clients and servers, Internet browsers such as Netscape® or Microsoft® Explorer®, streaming multimedia applications such as those provided by RealNetworks Inc., 2601 Elliott Avenue, Suite 1000 Seattle, WA 98121, voice-over-IP applications, video-conferencing applications, etc. etc.

It should be noted that the data traffic flows may be almost any protocol, and in particular almost any transport or network protocol which provides data flows with definite start, end, or last activation times, although within the embodiment either TCP or UDP over IP is preferred.

Although we have described above specific mappings of Flow-Ids to applications, in reality the Flow-ID's chosen by applications would be randomly generated, and hence the flow mappings would not be apparent. In order to address this problem the embodiment of the invention provides the flow-mapper program 4812 to map the flows F1 to F6 to the application sessions. The operation of the flow-mapper program will therefore now be described.

The flow-mapper program uses modern existing flow detection and metering systems along with wild constraints and fuzzy pattern matching to create a mapping. In the embodiment it requires software to detect application activation event, for example such as that provided by Getright by Headlight Software Inc. {http://www.getright.com/}. This is a file download manager that listens to any URL related events triggered by any Internet Application. It registers itself to the operating system as an event listener, so every URL related event will be passed to it. It is possible to include such detection technology in the flow mapper program 4812.

In other embodiments where the invention is incorporated as part of a software application itself there will be no need to include event detection functionality as described above, for the reason that the application when launched will know itself when it was started and closed down.

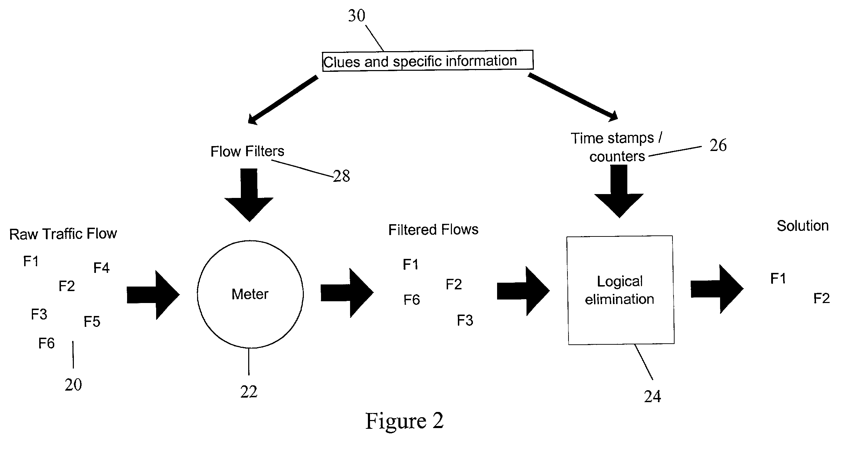

Figure 2 illustrates the main elements of the flow-mapper program 4812. Functionally, the program provides a flow meter 22 based on existing metering technology such as that discussed in the introduction. The flow meter provided by NeTraMet is particularly preferred, and this is available as freeware from The University of Auckland, New Zealand. In addition a logical eliminator means 24 is also provided, which takes as its input various data about the application sessions and the detected flows, and compares them using a series of predetermined logical equations, to map the detected data traffic flows to the sessions presently running on the computer. Further details of these elements are given next.

Turning first to the flow meter 22, as discussed this is based on existing technology such as that provided by NeTraMet. The present embodiment of the invention introduces the concept of "flow filters", however, which are flow profiles used by the flow meter 22 to provide an initial flow filtering step. Further details of the flow filters are discussed next.

A flow filter has similar structure as a Flow-Id, except for the fact that its fields are masks instead of attributes. Here is an example:

| Flow Filter: | |
|---|---|
| Source IP address | = 10.0.1.10 (content server IP address) |
| Destination IP address | = 10.0.2.99 (client IP address) |
| Source port number | = * (any port) |
| Destination port number | = * (any port) |
| Protocol ID | = * (any protocol number) |

Note: The wild card symbol (*) represents "anything" or "don't care".

The flow filter above instructs the meter to only measures traffic flowing between the content server and the client machine. To extend the concept further, the flow filter can be made more effective if it could take in logic statements as input. Here is an example of what such a conditional flow filter looks like:

| Conditional Flow Filter: | |
|---|---|
| Source IP address | = 10.0.1.10 (content server IP address) |
| Destination IP address | = 10.0.2.99 (client IP address) |
| Source port number web | = * & !80 & !8000 (all except traffic) |
| Destination port number | = * (any port) |
| Protocol Id | = * (any protocol number) |

From the example above, the filter instructs the meter to measure anything except web traffic flowing between the server machine and the client machine.

The conditional flow filter concept is a very powerful tool to instruct the meter to measure flows in which we are interested. However, this is not a complete solution to our problem. For instance, the filter will fail to differentiate between two flows that belongs to two separate sessions initiated by the same application. As an example, consider has installed a video-player application such as RealPlayer™, which plays video files obtained via the Internet. The user may wish to download two video files from the same website at the same time, and launches the application twice to create two separate download sessions. In such a scenario, the same application will have two independent sessions with associated traffic flows, but the traffic flows will have the same source and destination, and will each be of the same type of protocols due to the fact that there are a result of different instantiations of the same application, and are respectively downloading two video files of the same type. In such a case, the filter alone will be unable to differentiate between which flows belong to which session. Of course, this will not be a problem if the port numbers are magically provided in advanced. Therefore, it is very difficult to distinguish the flows of different sessions created by the same application, and hence the provision of the flow meter alone is insufficient to provide an adequate flow to session mapping, as the same application may have more than one session running at once. The further processing thus required is provided in the embodiment by the logical eliminator 24, as described later.

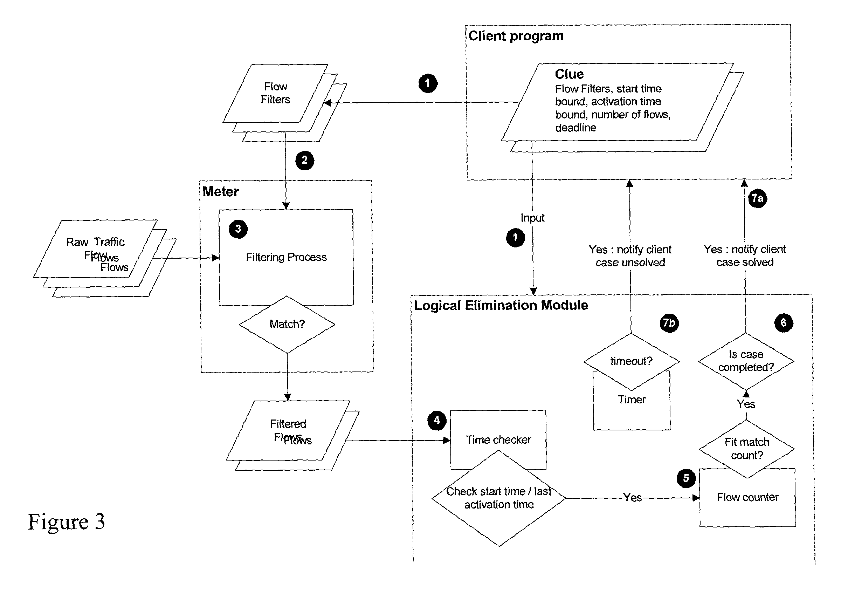

The flow meter 22 therefore accepts as its input all of the flows F1 to F6 (20) which are presently occurring, and receives a filter profile in the form of a flow filter from a store 30 of clues and specific information held in the data part 482 of the hard disk. A client program (see Fig 3) of the flow-mapper program controls the overall operation such that it passes to the flow meter the appropriate flow filter 28 from the store 30 depending upon which application session the flow-mapper is attempting to map flows to. Different flow filters for each application such as the applications App1, App2, and App3 are determined and provided in advance, for example by the application suppliers, the flow-mapper program developers or the network service provider.

Having received the appropriate flow filter, the flow meter 22 then filters out those flows which do not meet the criteria in the flow filter, and passes information on those flows that do meet the criteria to the logical elimination means 24. The operation of the logical elimination means will be described next.

A typical flow meter captures the following information:

- Source IP address, Destination IP address
- Source port number, Destination port number
- Protocol ID
- Traffic volume (both directions in separate readings)
- Packet count (both directions in separate readings)
- Diffserve code point (DSCP) (both directions in separate readings)
- Flow start time, flow last active time

In addition, the URL detector software can detect the following from a URL (i.e. session activation) event:

- Application activation time or event trigger time
- The content of a URL when it has just been activated.

Furthermore, it is possible to determine and store in advance in the store 30 for each different type of application specific information about the application session:

- Number of flows expected
- Type of flow expected

The following information can also be found from the information found by the flow meter:

- Flow active/inactive time
- Source location of traffic
- Traffic behaviour

By combining the concept of flow filters with the exploitation of the information listed above, it is possible to identify the flows that belong to the same application session by using logical elimination methods, and it is this process that is performed by the logical elimination means 24. An example scenario will illustrate the operation thereof.

Suppose the user triggers a URL event, for instance, by clicking on a URL link to a content server http://videoserver/video1.vdo. Here a video player application (say, App2) session is launched, ports are opened, a connection is made and the data is being transmitted. Meanwhile the system records:

i) The content of the URL (as detected by the URL detector);
ii) The time of the event (as logged by the URL detector); and
iii) The new flows detected by the meter.

By checking the content of the URL, the URL detector recognizes the source and destination of the traffic (e.g. the address listed on the URL and the client machine). Suppose the video playback creates 2 connections with the content server: a "UDP" connection for data and a "TCP" connection for control. From the clues given above, the logical eliminator means can now deduce which flow listed in the metering records belongs to the session with the following matching criteria. This is achieved by a logical elimination process as follows:

There are 1 UDP flow and 1 TCP flow that both contain the IP address of the "video server" & the "client machine"; and

The start time of the 2 flows should be very close to the application session start time (assuming the delivery is activated when the application is launched); and

If the transmission is still active, the last activation time of the 2 flows should be very close to the current system time; and

If the session has finished, the last activation time of the 2 flows should be very close to time the session finished.

With this logical statement, the logical eliminator means is able to map the flows detected by the flow meter to the application session. The chances of a successful mapping depends on how specific the matching criteria are given.

Applying the example scenario to the embodiment shown in Figure 2, the random raw traffic flows F1 to F6 are detected by the flow meter 22 running on the client machine. A flow filter (see example below) is given to the meter to filter out non-relevant flows.

| Source IP address | = content server IP address |
|---|---|
| Destination IP address | = client IP address |
| Source port number | = * (any port) |
| Destination port number | = * (any port) |
| Protocol ID | = UDP or TCP |

Then the logical eliminator means 24 takes in the filtered flows (F1,F2,F3,F6) and applies the logical parameters with time stamps and counters (see example below) to deduce the flow that belongs to that particular application session.

Within the example scenario, assume that the following time stamps with respect to the video player application session have been monitored by the application event detector part of the flow-mapper program:

| For the UDP flow: | |
|---|---|
| Video player application start time | = $t_{as}$ (e.g. 12:00:00) |
| flow count | = 1 |
| video player application end time | = $t_{ae}$ (e.g. 12:02:34) |
| For the TCP flow: | |
| Video player application start time | = $t_{as}$ (e.g. 12:00:00) |
| flow count | = 1 |
| video player application end time | = $t_{ae}$ (e.g. 12:02:34) |

Within the embodiment the flow mapper program operates such that each flow record recorded by the meter stores the flow activation time $t_a$ and last active time $t_{la}$. These measures are then given to the the logical eliminator means provided by the program, which checks if the start times of the flows are within a tolerance interval around the application start time, and further checks if the last active times are within the tolerance interval around the application end time. The tolerance interval setting must be flexible enough to be customised for different sessions, as different sessions may have different tolerance interval. Thus, if in the example the tolerance interval is as follows:

Tolerance interval : = -n/+p (e.g. -2 sec to + 3 sec )

then given that the session has already ended the logical eliminator applies the following logical conditions to determine whether a particular flow should be mapped to the video player application:

$$\text{Check: } [(t_{as} - 2) <= t_a <= (t_{as} + 3)] \text{ AND}$$

$$[(t_{ae} - 2) <= t_{la} <= (t_{ae} + 3)] = \text{TRUE}$$

If the session has not ended when the mapping is made, then the following time stamps concerning the flows will have been monitored by the application event detector:

| For the UDP flow: | |
|---|---|
| Video player application start time | $= t_{as}$ (e.g. 12:00:00) |
| flow count | $= 1$ |
| video player application end time | $= t_s$ (e.g. 12:07:57) |
| For the TCP flow: | |
| Video player application start time | $= t_{as}$ (e.g. 12:00:00) |
| flow count | $= 1$ |
| video player application end time | $= t_s$ (e.g. 12:07:57) |

wherein $t_s$ is the present system time as obtained from the computer system clock. In such a case where the session is still running, the following logical condition is applied by the logical eliminator means 24:

$$\text{Check: } [(t_{as} - 2) <= t_a <= (t_{as} + 3)] \text{ AND}$$

$$[(t_s - 2) <= t_{la} <= (t_s + 3)] = \text{TRUE}$$

It will be noted here that the values $t_s$ and $t_{ae}$ are almost synonymous in the above two logical conditions, and in fact the only difference is that it is necessary to use the system time $t_s$ when the application session is still running at the time the mapping is made simply because the application end time is not yet available. Apart from this distinction the two logical conditions are functionally identical.

If either of the above conditions is held to be TRUE, then the next step is that the logical eliminator counts the number of flows that match the criteria listed above. If there is no discrepancy between the result of the count with the expected flow count then the flows which met the above criteria will be mapped to the application session. If however more than the expected number of flows match the criteria then the logical elimination system returns a "case unsolved" notification to the client program. In such a case then no mapping is possible.

The above described process is shown in flow diagram form in Figure 3, and summarised again below.

The embodiment of the invention comprises 3 major systems: Metering System, Client program, and the Logical Elimination Module. The Metering System is implemented with flow filter ability and is preferably a NeTraMet based meter. The Logical Elimination Module 24 is the heart of the detection system which determine which flows belongs to which session. The Client Program contains a URL event detection ability, which is interested in the mapping result. Alternatively, the client program could be middleware such as a charging system or the like.

The Client Program collects all the important information that are accessible to form clues as input to the core of the system. Then it converts them to flow filter (2) input for the meter; it converts parameters such as start/last activation time boundary (tolerance interval), timeout timestamp, flow counter value (input for logical elimination module) (1); the meter monitors flows that match the flow filter description and passes them to the logical elimination module (3); the logical elimination module inspects the start time and last activation time of the flow (4); and then it checks whether the number of flows matches the description given (5). If all clues match then the case is completed (6) and the logical elimination module will return a case solved notification with the corresponding Flow-Ids to the client program (7a). Otherwise the whole process repeats (3) - (6). If the logical elimination module cannot resolve the flows within the given time frame, it will return a case unsolved notification with the reason of failure to the client program (7b)

Associating raw traffic flows to the corresponding application session has always been a huge difficulty to service providers and researchers. The present invention therefore significantly helps service providers, to provide Quality of Service to their customers or to offer Internet charging schemes, where previously this could not be done without modifying existing applications or legacy systems.

**Claims**

1. A method for mapping data traffic flows to an application session, comprising comparing one or more characteristics of the application session with one or more characteristics of the data traffic flows according to one or more logical conditions, wherein those data traffic flows which meet the logical conditions are mapped to the application session.

2. A method according to claim 1, wherein the one or more characteristics of the application session comprise at least one of: the session start time and/or the session end time and/or the present system time.

3. A method according to claims 1 or 2, wherein the one or more characteristics of the data traffic flows comprise at least one of: the traffic flows' start times and/or the traffic flows' last activation times.

4. A method according to any of the preceding claims, wherein the logical conditions comprise one or more characteristic value tolerances applied to the application session characteristics, to which the data flows' characteristics must relate according to the logical conditions to be mapped to the session.

5. A method according to claim 4 when dependent upon claim 3 when dependent upon claim 2, wherein the logical conditions include the following:

$$(t_{as} - n) <= t_a <= (t_{as} + p);$$

$$(t_{ae} - n) <= t_{la} <= (t_{ae} + p);$$

or:

$$(t_{as} - n) <= t_a <= (t_{as} + p);$$

$$(t_s - n) <= t_{la} <= (t_s + p);$$

wherein:

   $t_{as}$ is the application session start time;
   $t_a$ is a data traffic flow activation time;
   $t_{ae}$ is the application session end time;
   $t_s$ is the present system time;
   $t_{la}$ is a data traffic flow last active time; and
   $n$ and $p$ are characteristic value tolerances.

6. A method according to claims 4 or 5, wherein the characteristic value tolerances are application session dependent.

7. A method according to any of the preceding claims, comprising the step of filtering the data traffic flows according to the respective fixed properties thereof to remove from consideration by the comparing step those data traffic flows whose fixed properties indicate that they should not be mapped to the application session.

8. A method according to claim 7, wherein the fixed properties of each data traffic flow include any one or more of the following: the network address of the source of the data traffic flow; the network address of the destination of the data traffic flow; the source port number; the destination port number; and/or the protocol ID.

9. A method according to claims 7 or 8, wherein the filtering step comprises comparing the respective fixed properties of the data traffic flows with one or more logical filter conditions, and wherein those flows whose fixed properties meet all the logical filter conditions are then considered as possible mappings to the application session.

10. A computer program arranged such that when executed on a computer it causes the computer to perform a method according to any of claims 1 to 9.

11. A computer readable storage medium storing a computer program according to claim 10.

12. An apparatus for mapping data traffic flows to an application session, comprising logical comparison means for comparing one or more characteristics of the application session with one or more characteristics of the data traffic flows according to one or more logical conditions, wherein the logical comparison means is further arranged to map those data traffic flows which meet the logical conditions to the application session.

13. An apparatus according to claim 12, wherein the one or more characteristics of the application session comprise at least one of: the session start time and/or the session end time and/or the present system time.

14. An apparatus according to claims 12 or 13, wherein the one or more characteristics of the data traffic flows comprise at least one of: the traffic flows' start times and/or the traffic flows' last activation times.

15. An apparatus according to any of claims 12 to 14, wherein the logical conditions comprise one or more characteristic value tolerances applied to the application session characteristics, to which the data flows' characteristics must relate according to the logical conditions as determined by the logical comparison means to be mapped to the session.

16. An apparatus according to claim 15 when dependent upon claim 14 when dependent upon claim 13, wherein the logical conditions include the following:

$$(t_{as} - n) <= t_a <= (t_{as} + p);$$

$$(t_{ae} - n) <= t_{la} <= (t_{ae} + p);$$

or:

$$(t_{as} - n) <= t_a <= (t_{as} + p);$$

$$(t_s - n) <= t_{la} <= (t_s + p);$$

wherein:

$t_{as}$ is the application session start time;
$t_a$ is a data traffic flow activation time;
$t_{ae}$ is the application session end time;
$t_s$ is the present system time;
$t_{la}$ is a data traffic flow last active time; and
$n$ and $p$ are characteristic value tolerances.

17. An apparatus according to claims 15 or 16, wherein the characteristic value tolerances are application session dependent.

18. An apparatus according to any of claims 12 to 17, further comprising flow filtering means for filtering the data traffic flows according to the respective fixed properties thereof to remove from consideration by the logical comparison means those data traffic flows whose fixed properties indicate that they should not be mapped to the application session.

19. An apparatus according to claim 18, wherein the fixed properties of each data traffic flow include any one or more of the following: the network address of the source of the data traffic flow; the network address of the destination of the data traffic flow; the source port number; the destination port number; and/or the protocol ID.

20. An apparatus according to claims 18 or 19, wherein the flow filtering means further comprise flow property comparison means for comparing the respective fixed properties of the data traffic flows with one or more logical filter conditions, wherein the flow filtering means is further arranged to feed to the logical comparison means those flows whose fixed properties meet all the logical filter condition as determined by the flow property comparison means.

F1 –F6

Network I/O   42   CPU   44

40

47

48

Data   482    App 2   488

OS   484    486    App 3

App 1

Local I/O   46

Flow Mapper   4810

4812

EP 1 351 445 A1

Figure 1

Figure 2

Clues and specific information — 30

Flow Filters — 28

Time stamps / counters — 26

Raw Traffic Flow

F1  F4
 F2
F3  F5
 F6
20

Meter
22

Filtered Flows

F1
F6  F2
 F3

Logical elimination
24

Solution

F1
 F2

EP 1 351 445 A1

Figure 3

**European Patent Office**

**EUROPEAN SEARCH REPORT**

Application Number

EP 02 25 1983

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 93 26111 A (HEWLETT PACKARD CO ;GALLOWAY JAMES ROBERTSON (DE)) 23 December 1993 (1993-12-23) * page 2, line 8 - line 24 * * page 7, line 26 - line 32 * * page 8, line 16 - page 9, line 7 * * page 12, line 3 - page 13, line 20 * * page 14, line 20 - line 31 * * page 18, line 20 - line 27 * --- | 1-20 | H04L12/26 H04L12/56 H04L12/14 |
| X | EP 0 982 909 A (NOKIA OYJ) 1 March 2000 (2000-03-01) * paragraph [0007] * * paragraph [0011] * * paragraph [0020] * * paragraph [0031] - paragraph [0040] * --- | 1-20 | |
| X | US 5 862 335 A (STERNBERG JAY E ET AL) 19 January 1999 (1999-01-19) * column 2, line 44 - line 52 * * column 4, line 37 - column 5, line 9 * * column 5, line 24 - line 39 * * column 5, line 46 - column 9, line 6 * --- | 1-20 | TECHNICAL FIELDS SEARCHED (Int.Cl.7)  H04L |
| X | BRENT CHAPMAN, D AND ZWICKY, ELIZABETH D: "Building Internet Firewalls" BUILDING INTERNET FIREWALLS, XX, XX, September 1995 (1995-09), pages 496-502, XP002210960 * the whole document * ----- | 1-20 | |

The present search report has been drawn up for all claims

| Place of search | Date of completion of the search | Examiner |
|---|---|---|
| BERLIN | 26 August 2002 | Rosken, W |

EPO FORM 1503 03.82 (P04C01)

**ANNEX TO THE EUROPEAN SEARCH REPORT
ON EUROPEAN PATENT APPLICATION NO.**  EP 02 25 1983

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2002

| Patent document cited in search report | | Publication date | Patent family member(s) | | Publication date |
|---|---|---|---|---|---|
| WO 9326111 | A | 23-12-1993 | WO | 9326111 A1 | 23-12-1993 |
| | | | DE | 69226436 D1 | 03-09-1998 |
| | | | DE | 69226436 T2 | 03-12-1998 |
| | | | EP | 0598739 A1 | 01-06-1994 |
| | | | JP | 6509927 T | 02-11-1994 |
| | | | JP | 3290438 B2 | 10-06-2002 |
| | | | US | 5430709 A | 04-07-1995 |
| EP 0982909 | A | 01-03-2000 | AU | 5983299 A | 21-03-2000 |
| | | | CN | 1324537 T | 28-11-2001 |
| | | | WO | 0013436 A2 | 09-03-2000 |
| | | | EP | 0982909 A2 | 01-03-2000 |
| | | | EP | 1108316 A2 | 20-06-2001 |
| | | | GB | 2341059 A | 01-03-2000 |
| US 5862335 | A | 19-01-1999 | US | 6240452 B1 | 29-05-2001 |

EPO FORM P0459

For more details about this annex : see Official Journal of the European Patent Office, No. 12/82